# EUROPÄISCHE PATENTSCHRIFT

(11) **EP 4 169 821 B1**
(45) Veröffentlichungstag und Bekanntmachung des Hinweises auf die Patenterteilung: **15.05.2024**
(21) Anmeldenummer: 21191979.0
(22) Anmeldetag: 18.08.2021
(51) Int. Cl.: B62J 43/28, B62K 3/00

(54) **ELEKTROROLLER**
ELECTRIC SCOOTER
SCOOTER ÉLECTRIQUE

(43) Veröffentlichungstag der Anmeldung: 26.04.2023
(73) Patentinhaber: Driveman GmbH, 58339 Breckerfeld (DE)
(72) Erfinder: Schnippering, Axel, 58339 Breckerfeld (DE); Wiegand, Andreas, 58553 Halver (DE)
(74) Vertreter: Patentanwälte Dörner & Kötter PartG mbB

(56) Entgegenhaltungen:
- WO-A1-2021/133919
- CN-U- 210 258 732
- DE-A1-102019 210 677
- US-A1- 2018 072 378
- US-A1- 2020 398 930

## Beschreibung

Die Erfindung betrifft einen Elektroroller nach dem Oberbegriff des Patentanspruchs 1.

Mit einem Elektroantrieb versehene Roller, auch als E-Scooter bezeichnet, erfreuen sich zunehmender Beliebtheit. Diese Fahrzeuge sind kompakt ausgestaltet und durch die Möglichkeit des Umlegens der Lenksäule platzsparend verstaubar. Die Vorteile dieser elektrisch angetriebenen Fahrzeuge gegenüber Kraftfahrzeugen sind im stadtnahen Bereich deutlich erkennbar. Sie sind umweltfreundlich und benötigen aufgrund ihres geringen Eigengewichts wenig Energie. Außerdem ist ihre benötigte Stellfläche um ein Vielfaches kleiner und sie sind aufgrund ihrer Zusammenfaltbarkeit einfach zu handhaben. Roller der vorgenannten Art sind beispielsweise in der DE 20 2021 000 494 U1 beschrieben.

Bei Elektrorollen der vorstehenden Art ist eine Batterie zur Spannungsversorgung des angeordneten Elektromotors vorhanden, der regelmäßig in der Nabe des Hinterrades positioniert ist. Die Batterie hat einen wesentlichen Anteil an dem Gesamtgewicht des Elektrorollers, weshalb es wünschenswert ist, diese zeitweilig zu entnehmen. Eine entnehmbare Batterie ist darüber hinaus zur Durchführung eines Ladevorgangs außerhalb des Tretrollers erforderlich.

Aus der DE 20 2020 104 564 U1 ist ein Tretroller bekannt, bei dem vor der Trittfläche senkrecht zu dieser eine Batterieaufnahmevorrichtung angeordnet ist, in der eine Batterie wechselbar eingeschoben ist. Zum einfachen Wechsel der Batterie ist diese mit einem Tragegriff versehen. Nachteilig an diesem vorbekannten Tretroller ist, dass durch die vor dem Lenker senkrecht angeordnete Batteriehalteeinrichtung ein Einklappen des Lenkers verhindert ist. Darüber hinaus beansprucht die Batterieaufnahmevorrichtung mit der eingesetzten Batterie einen erheblichen Bauraum, wodurch der Elektroroller eine sperrige Gestalt aufweist. Nicht zuletzt ist bei dieser Lösung das erhebliche Gewicht der Batterie der Lenkstange vorgelagert entlang dieser positioniert, wodurch die Straßenlage des Tretrollers und insbesondere auch sein Bremsverhalten negativ beeinflusst ist.

Hier will die Erfindung Abhilfe schaffen. Der Erfindung liegt die Aufgabe zugrunde, einen Elektroroller bereitzustellen, der bei einer gleichmäßigen Gewichtsverteilung eine einfach wechselbare Batterie aufweist und dabei platzsparend und handlich ausgebildet ist. Gemäß der Erfindung wird diese Aufgabe durch einen Elektroroller mit den Merkmalen des kennzeichnenden Teils des Patentanspruchs 1 gelöst. Dokument US 2020/398930 A1 zeigt die Präambel des Anspruchs 1.

Mit der Erfindung ist ein Tretroller bereitgestellt, der bei einer gleichmäßigen Gewichtsverteilung eine einfach wechselbare Batterie aufweist und dabei platzsparend und handlich ausgebildet ist. Dadurch, dass der Tritt einen umlaufenden Rahmen umfasst, der ein Batteriefach begrenzt, das die Batterie aufnimmt, wobei die Batterie ein Batteriegehäuse umfasst, welches das Batteriefach verschließt und dessen Oberseite die Trittfläche des Tritts ausbildet, ist eine gleichmäßige Gewichtsverteilung zwischen den Rädern bewirkt. Dadurch, dass das Batteriegehäuse Verschlussmittel aufweist, die mit einem an den Rahmen angeordneten Verschließmechanismus zusammenwirken, über den die Batterie lösbar mit dem Rahmen verbunden ist, ist ein einfacher Wechsel der Batterie ermöglicht.

Erfindungsgemäß umfasst der Verschließmechanismus in einer ersten Alternative wenigstens ein Federelement, das beim Einsetzen der Batterie in das Batteriefach über die Verschlussmittel derart verspannt wird, dass eine entgegen der Trittfläche gerichtete vertikale Federkraft auf das Batteriegehäuse einwirkt, durch welche die Batterie in dem Batteriefach gehalten wird. Hierdurch ist eine selbsttätige Fixierung der Batterie beim Einsetzen in das Batteriefach bewirkt.

Dabei ist das wenigstens eine Federelement durch eine Blattfeder gebildet, die endseitig eine Aufnahme aufweist, wobei die Verschlussmittel einen an dem Batteriegehäuse angeordneten Mitnehmer umfassen, der in die Aufnahme eingreift. Hierdurch ist eine geführte Spannung der Blattfeder beim Einsetzen der Batterie in das Batteriefach erzielt.

In weiterer Ausgestaltung der Erfindung ist der Mitnehmer durch wenigstens eine an dem Batteriegehäuse angeordnete Achse gebildet, wobei die wenigstens eine Blattfeder endseitig derart gebogen ist, dass eine Rinne gebildet ist, welche die Aufnahme für die Achse ausbildet. Hierdurch ist eine temporäre formschlüssige Verbindung durch Eingleiten der Achse in die durch die Rinne gebildete Achsaufnahme bewirkt.

In Weiterbildung der Erfindung ist wenigstens ein Positioniermagnet angeordnet, über den die wenigstens eine Blattfeder vor dem Einsetzen des Batteriegehäuses in das Batteriefach in einer definierten oberen Position gehalten ist. Hierdurch ist ein zuverlässiges Eingleiten der an dem Batteriegehäuse angeordneten Achse in die Achsaufnahme der Blattfeder gewährleistet.

In Ausgestaltung der Erfindung ist das wenigstens eine Federelement derart ausgebildet, dass beim Einsetzen der Batterie in das Batteriefach zusätzlich eine horizontale Federkraft bewirkt ist, durch die das Batteriegehäuse an seiner dem Verschließmechanismus entgegengerichteten Seite gegen den umlaufenden Rahmen gedrückt wird. Hierdurch ist eine gleichzeitige horizontale Positionierung der Batterie bei ihrem Einsetzen in das Batteriefach erzielt. Bei Vorsehen der elektrischen Kontakte an der Batterie und dem Batteriefach an der dem Verschließmechanismus entgegengesetzten Seite ist zudem eine Verbindung der Kontakte durch die horizontale Federkraft unterstützt.

Erfindungsgemäß umfasst der Verschließmechanismus in einer zweiten Alternatieve wenigstens einen Haltemagneten, der an dem Rahmen angeordnet ist, wobei die Verschlussmittel einen in eingesetzter Position des Batteriegehäuses in das Batteriefach über dieses hinausragenden Haltearm umfasst, der einen magnetischen Abschnitt aufweist, der mit dem Haltemagnet derart zusammenwirkt, dass auf das Batteriegehäuse eine entgegen der Trittfläche gerichtete, vertikale Kraft bewirkt ist, durch welche die Batterie in dem Batteriefach gehalten wird.

Hierdurch ist eine zusätzliche Fixierung der Batterie in dem Batteriefach bewirkt.

In Weiterbildung der Erfindung ist an dem Batteriegehäuse ein den Rahmen zumindest bereichsweise überdeckender Flügel angeordnet, der eine im Wesentlichen parallel zum Rahmen angestellte Anschlagplatte aufweist, wobei an dem Rahmen ein schwenkbar gelagerter Kipphebel angeordnet ist, der einen Ausleger aufweist, der in einer ersten Schwenkposition des Kipphebels an der Anschlagplatte anschlägt und der bei weiterem Verschwenken des Kipphebels ein Anheben des mit der Anschlagplatte verbundenen Batteriegehäuses bewirkt. Hierdurch ist ein einfaches manuelles Herauslösen der Batterie aus dem Batteriefach ermöglicht.

In weiterer Ausgestaltung der Erfindung weist der Flügel an seinem freien Ende eine Querschnittsverjüngung auf, in die in einer zweiten Schwenkposition des Kipphebels eine endseitig an diesen angeordnete Wulst eingreift. Hierdurch ist das Kipphebelende von dem Flügel aufgenommen, wodurch einer Verletzung durch hervorstehende Hebelkanten entgegengewirkt ist.

In Weiterbildung der Erfindung ist an dem Rahmen eine hervorstehende Anschlagkante angeordnet, an welcher der Kipphebel mit seinem der Wulst entgegengesetzten Ende anliegt, wobei der Kipphebel vorzugsweise an diesem Ende eine Einbuchtung aufweist, in welche die Anschlagkante eingreift. Hierdurch ist eine optisch ineinander übergehende Oberfläche von Anschlagkante, Kipphebel und Flügel erzielt.

In Ausgestaltung der Erfindung ist an dem Batteriegehäuse an wenigstens einer Längsseite, bevorzugt an beiden Längsseiten, insbesondere gegenüberliegend eine Führungskulisse angeordnet, in die ein in dem Batteriefach angeordneter Führungsbolzen eingreift, um den die Batterie schwenkbar ist. Hierdurch ist ein definiertes Einschrauben der Batterie zum Einsetzen in das Batteriefach um die als Schwenkachse dienenden Führungsbolzen ermöglicht.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung eines Elektrorollers (ohne Lenker)
a) In einer räumlichen Ansicht;
b) Im Längsschnitt;
c) in einer räumlichen Ansicht ohne Batterie;
d) in einer Detailansicht im Bereich des Verschließmechanismus;

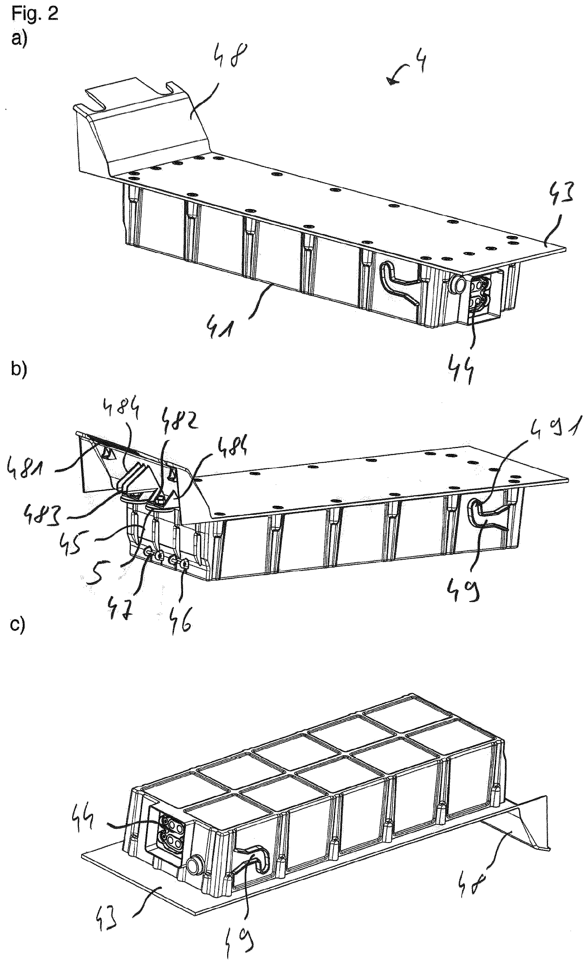

- Figur 2: die schematische Darstellung der Batterie des Elektrorollers aus Figur 1
a) in einer ersten räumlichen Ansicht von oben;
b) in einer zweiten räumlichen Ansicht von oben;
c) in einer räumlichen Ansicht von unten;
- Figur 3: die Detaildarstellung des Verschließmechanismus des Batteriefachs aus Figur 3
a) mit Batterie in eingesetzter Position;
b) mit Batterie in teilgelöster Position bei vertikaler Nullkraftlage der Blattfeder;
c) mit Batterie in gelöster Position
- Figur 4: die Detaildarstellung des Batteriefachs des Elektrorollers mit teilgelöster Batterie bei vertikaler Nullkraftlage der Blattfeder im Längsschnitt;

- Figur 5: die räumliche Darstellung des Kipphebels des Elektrorollers aus Figur 1;
- Figur 6: die Darstellung der Blattfeder des Verschließmechanismus des Elektrorollers aus Figur 1 in entspanntem Zustand
a) in räumlicher Darstellung;
b) in der Draufsicht;
- Figur 7: die Darstellung der Blattfeder aus Figur 6 in gespanntem Zustand
a) in einer ersten räumlichen Darstellung;
b) in einer zweiten räumlichen Darstellung.
- Figur 8: die Darstellung des Verlaufs der auf das Batteriegehäuse der Batterie des Elektrorollers aus Figur 1 einwirkenden Kraft (in N) über den Weg (in mm) der Achse des Batteriegehäuses beim Einsetzen der Batterie in das Batteriefach
a) Krafteinwirkung der Blattfeder in vertikaler Richtung;
b) Krafteinwirkung der Blattfeder in horizontaler Richtung;
c) Krafteinwirkung des Haltemagneten (ohne Blattfeder) in vertikaler Richtung und
d) Krafteinwirkung des Haltemagneten (mit Blattfeder) in vertikaler Richtung.

Der als Ausführungsbeispiel gewählte Elektroroller 1 umfasst einen Tritt 2, der in bekannter Art und Weise über eine arretierbare Schwenkvorrichtung 3 mit einer Rahmenstrebe 31 verbunden ist, in der eine Lenkstange 32 drehbar gelagert ist, die an einer Seite mit einem Vorderrad 33 sowie an der diesem gegenüberliegenden Seite mit einem - nicht dargestellten - Lenker versehen ist. Die Lenkstange 32 kann über die arretierbare Schwenkvorrichtung 3 in eine im Wesentlichen zum Tritt 2 parallele Position verschwenkt werden. Der Tritt 2 ist heckseitig über eine Hinterradschwinge 34 mit einem Hinterrad 35 verbunden. Das Hinterrad 35 ist mit einem Elektromotor 36 verbunden, der über eine Batterie 4 gespeist ist, die von dem Tritt 2 aufgenommen ist. Im Ausführungsbeispiel umfasst die Batterie 4 eine Anzahl von in einem Batteriegehäuse 41 angeordneten, miteinander verschalteten, mehrfach aufladbaren Lithium-lonen-Batteriezellen 42.

Der Tritt 2 umfasst im Ausführungsbeispiel zwei Seitenprofile 21, die endseitig über je ein zwischen diesen angeordnetes Querprofil 22 miteinander verbunden sind. Die Seitenprofile 21 und die Querprofile 22 sind als Hohlprofile mit im Wesentlichen rechteckförmigem Querschnitt ausgebildet. Der durch die Seitenprofile 21 und die Querprofile 22 gebildete, rechteckige Rahmen begrenzt ein Batteriefach 23, in welches die Batterie 4 mit ihrem Batteriegehäuse 41 eingesetzt ist. In dem Batteriefach 23 sind an den Seitenprofilen 21 gegenüberliegend zwei Führungsbolzen 24 zu Eingriff in außen an dem Batteriegehäuse 41 angeordnete Führungskulissen 49 angeordnet.

In dem Batteriefach 23 sind weiterhin elektrische Kontakte 25 angeordnet, die mit dem Elektromotor 36 elektrisch verbunden sind. Die Batterie 4 weist elektrische Kontakte 44 auf, die an den Kontakten 25 des Batteriefachs 23 anliegen. Im Ausführungsbeispiel sind die Kontakte 44, 25 von Batterie 4 und Batteriefach 23 an der dem Hinterrad abgewandten Querseite des Batteriefachs 23 angeordnet. Das Batteriegehäuse 41 ist über einen Deckel 43 verschlossen, dessen Oberseite die Trittfläche des Tritts 2 ausbildet.

Das Batteriegehäuse 41 weist an ihrer der Hinterradschwinge 34 zugewandten Querseitenwand 45 an ihrer dem Deckel 43 entgegengerichteten Unterseite zwei Paare von parallel zueinander angeordneten Laschen 46 auf, zwischen denen beabstandet zur Querseitenwand 45 jeweils eine Achse 47 angeordnet ist. Im Ausführungsbeispiel sind die beiden als Mitnehmer fungierenden Achsen 47 in Flucht miteinander angeordnet.

An seiner dem Deckel 43 zugewandten Oberseite ist an dem Batteriegehäuse 41 eine nach außen kragende Haube 48 angeordnet, die in Längsrichtung des Batteriegehäuses 41 gesehen nach außen gewölbt ausgebildet ist. Die Haube 48 umspannt im Ausführungsbeispiel einen Winkel von 88°. Die seitlichen Kanten der Haube 48 fluchten mit dem Deckel 43. An seiner vorderen Außenkante weist die Haube 48 eine Materialverjüngung auf, wodurch ein Absatz 481 gebildet ist.

An der Innenseite der Haube 48 ist oberhalb des Deckels 43 ein Haltearm 482 angeordnet, der mit zwei beabstandet zueinander angeordneten Bohrungen zur Befestigung jeweils einer ferromagnetischen Gegenscheibe 51 versehen ist. Die Gegenscheiben 51 weisen hierzu einen Gewindestift auf, der durch die jeweilige Bohrung des Haltearms 482 geführt und auf den jeweils zur Befestigung eine Mutter aufgeschraubt ist. Parallel zu dem Haltearm 482 ist beabstandet zu diesem eine Anschlagplatte 483 angeordnet. Der Haltearm 482 und die diesen überragende Anschlagplatte 483 sind über Rippen 484 mit der Haube 48 verbunden und verlaufen auf zwei parallel zueinander angeordneten, gedachten Ebenen, die wiederum parallel zu einer weiteren gedachten Ebene verlaufen, auf welcher der Deckel 43 verläuft.

Die ferromagnetischen Gegenscheiben 51 liegen jeweils auf einem als Permanentmagnet ausgeführten Haltemagneten 5 auf. Die beiden Haltemagnete 5 weisen jeweils einen Gewindestift auf, über den sie in das Querprofil 22 des Tritts 2 eingeschraubt sind. Das Batteriegehäuse 41 ist auf diese Weise über die Magnetkräfte der Haltemagnete 5 in dem Batteriefach 23 des Tritts 2 gehalten.

In dem als Hohlprofil ausgebildeten Querprofil 22 ist eine Achse 26 in Querrichtung zwischen dessen gegenüberliegenden seitlichen Hohlprofilwänden drehfest angeordnet. Die Achse 26 ist durch die Achsaufnahmen 61 von zwei beabstandet zueinander angeordneten Blattfedern 6 geführt, die drehfest mit der Achse 26 verbunden sind. An ihrem gegenüberliegenden, freien Ende sind die Blattfedern 6 jeweils gebogen ausgebildet, wodurch eine nach oben offene Rinne 62 gebildet ist. Mit ihrer Rinne 62 ragen die Blattfedern 6 jeweils durch einen in dem Querprofil 22 hierzu eingebrachten vertikalen Führungsschlitz 27 hindurch, wo sie jeweils eine Achse 47 des Batteriegehäuses 41 aufnehmen.

Bei der Montage der Batterie 4 wird das Batteriegehäuse 41 derart in das Batteriefach 23 eingesetzt, dass die Führungsbolzen 24 in die außen an dem Batteriegehäuse 41 angeordneten Führungskulissen 49 eingreifen. So in den Führungskulissen geführt wird das Batteriegehäuse 41 in das Batteriefach 23 eingeschoben, bis die Führungsbolzen 24 den abgewinkelten Kulissenanschlag 491 der Führungskulissen 49 erreicht haben. Die beiden in dem Kulissenanschlag 491 der Führungskulissen 49 gelagerten Führungsbolzen 24 bilden eine Schwenkachse für die Batterie 4 aus. In dieser Position liegen die Kontakte 44 des Batteriegehäuses 41 an den Kontakten 25 des Batteriefachs 23 des Elektrorollers 1 an. Sodann wird die Batterie 4 um die Führungsbolzen 24 in das Batteriefach 23 eingeschwenkt, wobei jede der beiden Achsen 47 des Batteriegehäuses 41 in eine Rinne 62 einer Blattfeder 6 eingesetzt wird. Die Blattfedern 6 sind hierbei jeweils von einem Positioniermagnete 7 in einer definierten oberen Position gehalten. Die beiden Positioniermagneten 7 weisen jeweils einen Gewindestift auf, mit dem sie in ein in dem Querprofil 22 angeordnetes Halteblech 28 eingeschraubt sind. Im Ausführungsbeispiel ist das Halteblech 28 um seine Längsachse gewölbt ausgeführt, wobei es die Achse 26 umfassend mit seinen beiden Endkanten an der Längsseitenwand des Querprofils 22 befestigt ist.

Beim Hineinschwenken der Batterie 4 in das Batteriefach 23 werden die Blattfedern 6 über die in deren Rinnen 62 eingreifenden Achsen 47 des Batteriegehäuses 41 mitgenommen, wodurch die Blattfedern 6 gespannt werden. Hierdurch wird auf das Batteriegehäuse 41 der Batterie 4 eine Federkraft sowohl in horizontaler Richtung, als auch in vertikaler Richtung bewirkt.

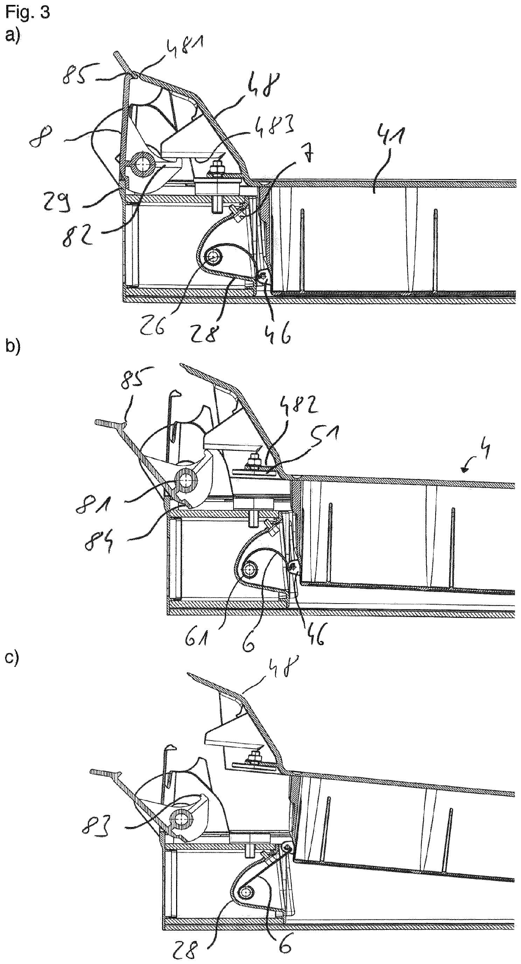

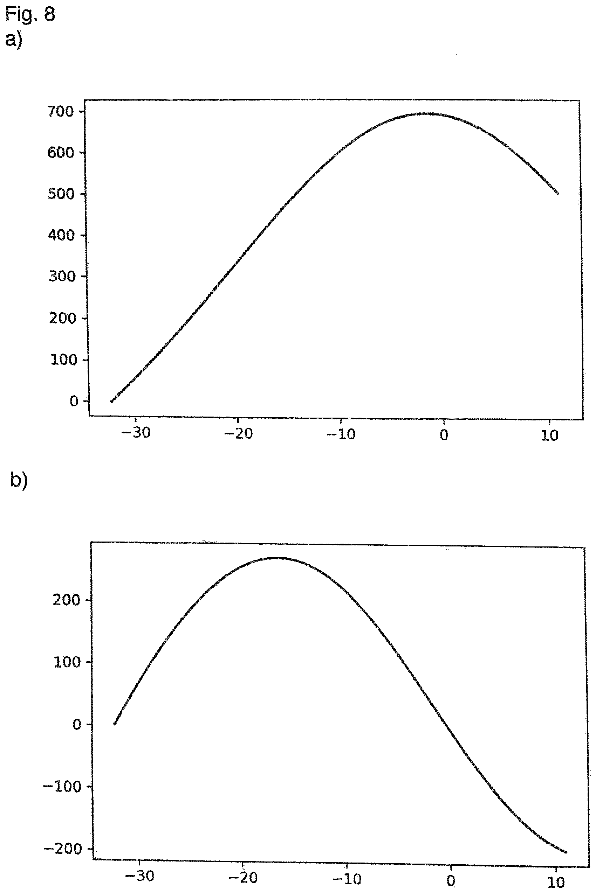

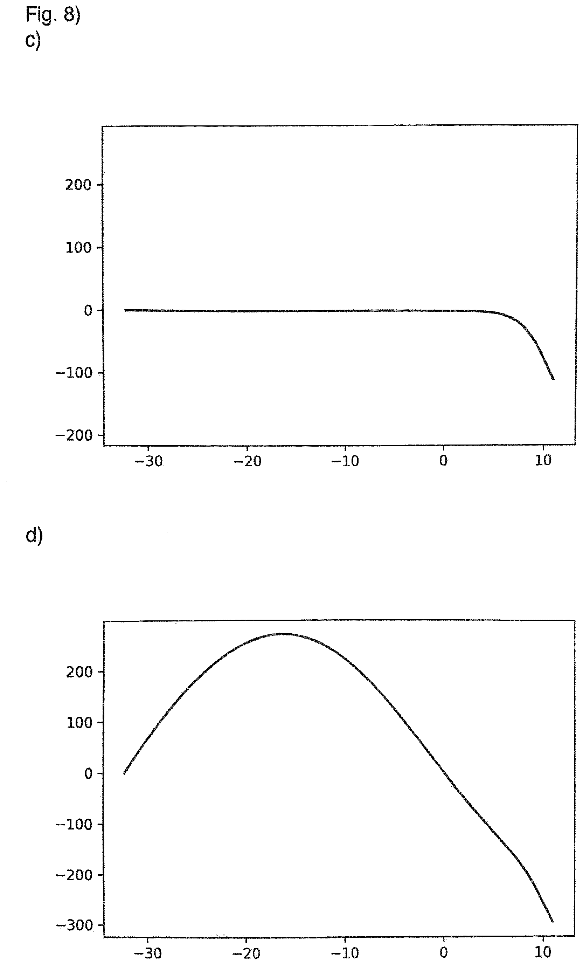

In dem Diagramm gemäß Figur 8 a) ist der Verlauf der horizontalen Federkraft in [N] (Ordinate) über den vertikalen Weg der Achse 47 der Batterie 4 beim Einsetzen in das Batteriefach 23 in [mm] (Abszisse) aufgetragen. Die Ordinate ist in den Abbildungen der Figur 3 jeweils dargestellt. Am Nullpunkt der Ordinate erreicht die horizontale Federkraft ihrem Maximalwert; die vertikale Federkraft ist Null (vertikale Nullkraftlage). Der Nullpunkt der Ordinate liegt vorzugsweise an der Stelle, wo die Achse 47 der Batterie 4 auf einer gedachten Linie L liegt, die durch die Rotationsachsen der Führungsbolzen 24 und der Achse 26 verläuft, auf der die Blattfedern 6 befestigt sind. Im Ausführungsbeispiel beträgt die maximale Federkraft ca. 690 N.

In dem Diagramm gemäß Figur 8 b) ist der Verlauf der vertikalen Federkraft in [N] über den Weg der Achse 47 der Batterie 4 in [mm] aufgetragen. Etwa nach 15 mm erreicht die vertikale Federkraft ihren positiven Maximalwert, bevor sich die Federkraft umkehrt und ihren negativen Maximalwert (bei vollständiger Aufnahme der Batterie 4) erreicht. Im Ausführungsbeispiel beträgt der negative Maximalwert ca. 200 N.

Die Batterie wird zusätzlich über den Haltemagneten 5, dessen Magnetkraft auf die ferromagnetische Gegenscheibe 51 des Batteriegehäuses 41 einwirkt, gehalten. In dem Diagramm gemäß Figur 8 c) ist der Verlauf der auf das Batteriegehäuse 41 einwirkenden vertikalen Magnetkraft in [N] über den Weg der Achsen 47 der Batterie 4 in [mm] aufgetragen. Im Ausführungsbeispiel beginnt die Magnetwirkung etwa 4 mm vor der Montageendposition der Batterie 4 und erreicht in Endposition seinen Maximalwert, der im Ausführungsbeispiel ca. 110 N beträgt.

In dem Diagramm gemäß Figur 8 d) ist schließlich der Verlauf der resultierenden auf das Batteriegehäuse 41 einwirkenden vertikalen Feder- und Magnetkraft in [N] über den Weg der Achsen 47 der Batterie 4 in [mm] aufgetragen. Im Ausführungsbeispiel wird eine resultierende vertikale Haltekraft von 300 N erzielt.

Zum Lösen der Batterie 4 aus dem Batteriefach 23 des Tritts 2 ist auf dem Querprofil 22 ein Kipphebel 8 angeordnet. Der Kipphebel 8 weist eine hülsenförmige Achsaufnahme 81 auf, über die er auf einer Welle 37 schwenkbar gelagert ist, die zwischen den Hinterradschwingen 34 angeordnet ist. An die Achsaufnahme 81 ist rechtwinklig zum Kipphebel 8 ein Ausleger 82 angebracht, der endseitig einen Hammerkopf 83 aufweist. An seinem dem Querprofil 22 zugewandten Ende ist an dem Kipphebel 8 eine Einbuchtung 84 vorhanden, die in einer ersten Schwenkposition an einer an dem Querprofil 22 angeordneten Anschlagkante 29 anliegt. An seinem gegenüberliegenden Ende ist der Kipphebel 8 nach außen abgewinkelt ausgebildet, wobei im Bereich der Abwinkelung an den Kipphebel 8 eine rechtwinklig nach innen kragende Wulst 85 vorhanden ist. In der ersten Schwenkposition liegt der Kipphebel 8 zugleich mit seiner Wulst 85 an dem endseitigen Absatz 481 der Haube 48 des Batteriegehäuses 41 an.

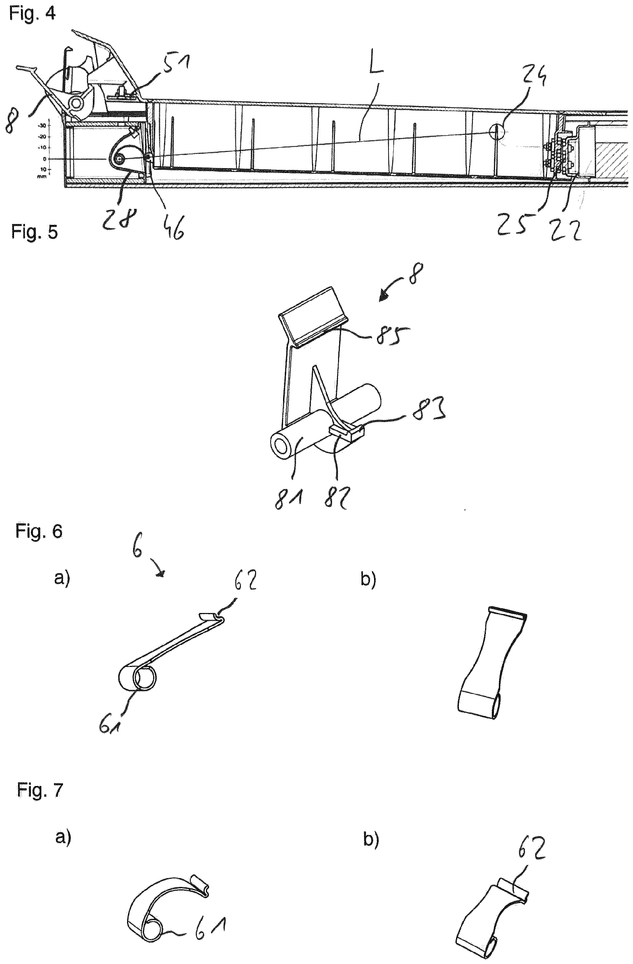

In den Figuren 3 a) bis 3 c) ist das Herauslösen der Batterie 4 aus dem Batteriefach 23 des Tritts 2 des Elektrorollers 1 gezeigt: In montierter Position des Batteriegehäuses 41 befindet sich der Kipphebel 8 in der ersten Schwenkposition und liegt mit seiner Einbuchtung 84 an der Anschlagkante 29 und mit seiner Wulst 85 an dem Absatz 481 der Haube 48 an (vgl. Fig. 3a)). Durch Verschwenken des Kipphebels 8 in die dem Batteriegehäuse 41 entgegengesetzte Richtung schlägt der Hammerkopf 83 an die Anschlagplatte 483 der Haube 48 an und bewirkt bei weiterem Verschwenken auf die Anschlagplatte 483 eine vertikale Kraft, durch die das Batteriegehäuse 41 angehoben wird, bis der vertikale Kraftverlauf der Blattfedern 6 (vgl. Fig. 7 b)) seinen Wendepunkt erreicht hat. Hierbei gleitet der Hammerkopf 83 entlang der Anschlagplatte 483, bis der Kipphebel 8 in einer zweiten Position mit seiner der Haube 48 abgewandten Rückseite an der Anschlagkante 29 anliegt. (vgl. Fig. 3 b)). Nachfolgend kann die Batterie 4 mit Unterstützung der nun in Entnahmerichtung gerichteten, auf das Batteriegehäuse 41 einwirkenden vertikalen Kraft der Blattfedern 6 entnommen werden (vgl. Fig. 3 c)). Nach Herausgleiten der Achsen 47 des Batteriegehäuses 41 aus den Rinnen 62 der Blattfedern 6 sind die Blattfedern 6 über die Positioniermagnete 7 in ihrer Position fixiert, bis eine erneute Montage der Batterie 4 erfolgt.

Bei erneutem Einschwenken der Batterie 4 in das Batteriefach 23 wird der Hammerkopf 83 des Kipphebels 8 von der Anschlagplatte 483 der Haube 48 mitgenommen, an der er entlanggleitet, wodurch der Kipphebel 8 in die erste Position verschwenkt wird, bis die Wulst 85 des Kipphebels 8 in den Absatz 481 der Haube 48 eingreift.

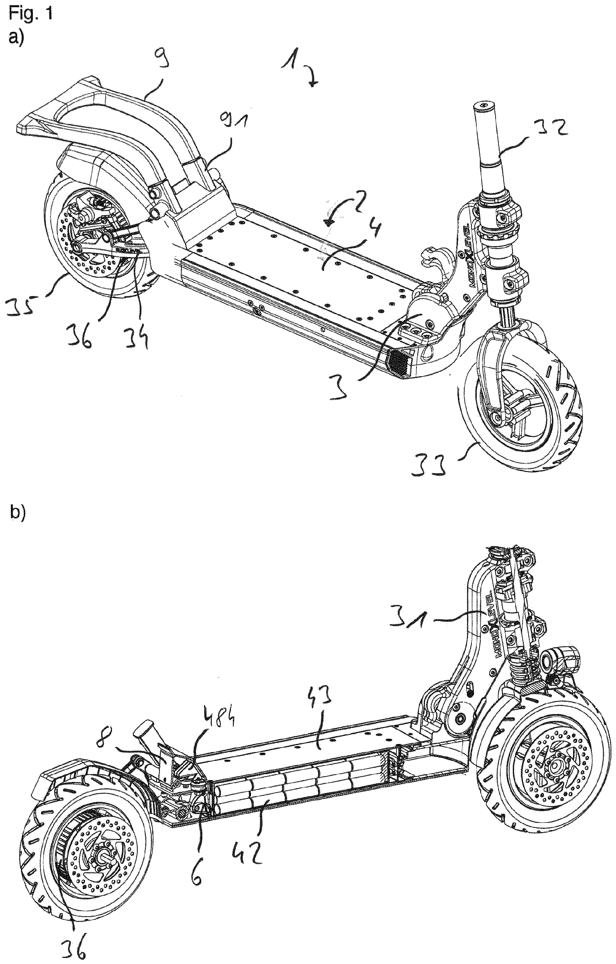

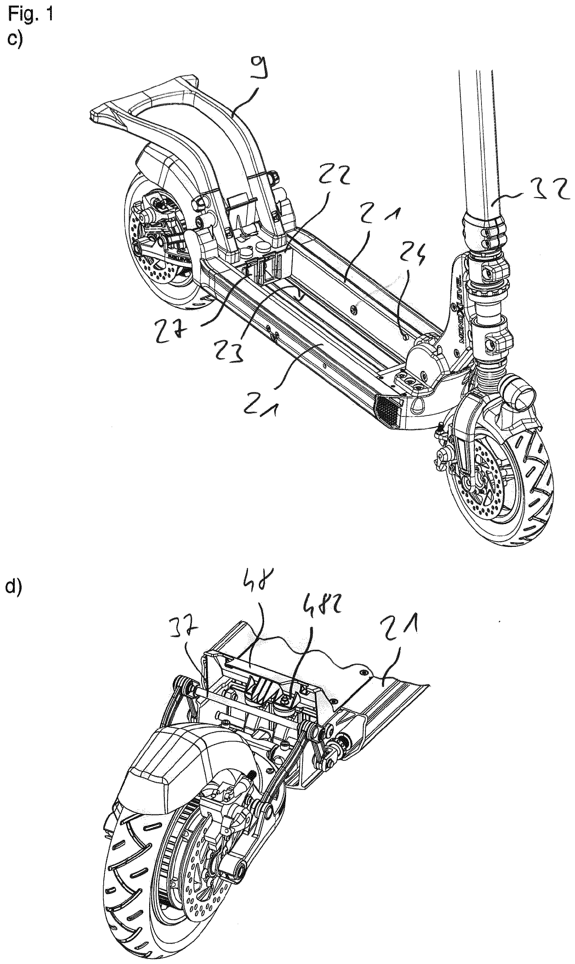

Im Ausführungsbeispiel ist der Elektroroller 1 mit einem Sicherungsbügel 9 versehen, der mit seinen beiden Enden von zwei auf dem Querprofil 22 angeordneten, verschließbaren Bügelaufnahmen 91 aufgenommen ist. In Figur 1 a) ist der Sicherungsbügel 9 derart in die Bügelaufnahmen 92 eingesetzt, dass er in Richtung des Hinterrades 35 ausgerichtet ist. Zur Sicherung des Elektrorollers 1 gegen unbefugten Gebrauch wird der Sicherungsbügel 9 nach Entriegelung der Bügelaufnahmen 91 aus diesen herausgezogen und nach Umlegen der Lenkstange 32 über die Schwenkvorrichtung 3 um 180° um seine Längsachse verdreht wieder in die Bügelaufnahmen 91 eingesetzt, wonach diese verriegelt werden. In dieser Position umfasst der Sicherungsbügel 9 die umgeschwenkte Lenkstange 32, wodurch diese nicht in die vertikale Position zurück verschwenkt werden kann. Darüber hinaus liegt der Sicherungsbügel 9 in dieser Position auf dem Tritt 2 des Elektrorollers 1 auf, wodurch zusätzlich die Batterie 4 gegen Entnahme aus dem Batteriefach 23 gesichert ist.

## Patentansprüche

1. Elektroroller (1), mit einem Tritt (2), an dem heckseitig ein Hinterrad (35) angeordnet ist, das mit einem Elektromotor (36) verbunden ist, über den es antreibbar ist, wobei eine wechselbare Batterie (4) angeordnet ist, die mit dem Elektromotor (36) elektrisch verbunden ist, wobei der Tritt (2) einen umlaufenden Rahmen umfasst, der ein Batteriefach (23) begrenzt, das die Batterie (4) aufnimmt, wobei die Batterie (4) ein Batteriegehäuse (41) umfasst, welches das Batteriefach (23) verschließt und dessen Oberseite die Trittfläche des Tritts (2) ausbildet und wobei das Batteriegehäuse (41) Verschlussmittel aufweist, die mit einem an dem Rahmen angeordneten Verschließmechanismus zusammenwirken, über den die Batterie (4) lösbar mit dem Rahmen verbunden ist, **dadurch gekennzeichnet, dass**
der Verschließmechanismus wenigstens ein Federelement umfasst, das beim Einsetzen der Batterie (4) in das Batteriefach (23) über die Verschlussmittel derart verspannt wird, dass eine entgegen der Trittfläche gerichtete, vertikale Federkraft auf das Batteriegehäuse (41) einwirkt, durch welche die Batterie (4) in dem Batteriefach (23) gehalten wird, wobei das wenigstens eine Federelement durch eine Blattfeder (6) gebildet ist, die endseitig eine Aufnahme aufweist, wobei die Verschlussmittel einen an dem Batteriegehäuse (41) angeordneten Mitnehmer umfassen, der in die Aufnahme eingreift
und/oder
dass der Verschließmechanismus wenigstens einen Haltemagneten (5) umfasst, der an dem Rahmen angeordnet ist, wobei die Verschlussmittel einen in eingesetzter Position der Batterie (4) in das Batteriefach (23) über dieses hinausragenden Haltearm (482) umfasst, der einen magnetischen Abschnitt aufweist, der mit dem Haltemagneten (5) derart zusammenwirkt, dass auf das Batteriegehäuse (41) eine entgegen der Trittfläche gerichtete, vertikale Kraft bewirkt ist, durch welche die Batterie (4) in dem Batteriefach (23) gehalten wird.

2. Elektroroller nach Anspruch 1, **dadurch gekennzeichnet, dass** der Mitnehmer durch wenigstens eine an dem Batteriegehäuse (41) angeordnete Achse (47) gebildet ist, wobei die wenigstens eine Blattfeder (6) endseitig derart gebogen ist, dass eine Rinne (62) gebildet ist, welche die Aufnahme für die Achse ausbildet.

3. Elektroroller nach Anspruch 1 oder 2, **dadurch gekennzeichnet, dass** wenigstens ein Positioniermagnet (7) angeordnet ist, über den die wenigstens eine Blattfeder (6) vor dem Einsetzen der Batterie (4) in das Batteriefach (23) in einer definierten oberen Position gehalten ist.

4. Elektroroller nach einem der vorgenannten Ansprüche, **dadurch gekennzeichnet, dass** das wenigstens eine Federelement derart ausgebildet ist, dass beim Einsetzen der Batterie (4) in das Batteriefach (23) zusätzlich eine horizontale Federkraft bewirkt ist, durch die das Batteriegehäuse (41) an seiner dem Verschließmechanismus entgegen gerichteten Seite gegen den umlaufenden Rahmen gedrückt wird.

5. Elektroroller nach einem der vorgenannten Ansprüche, **dadurch gekennzeichnet, dass** an dem Batteriegehäuse (41) ein den Rahmen zumindest bereichsweise überdeckender Flügel angeordnet ist, der eine im Wesentlichen parallel zum Rahmen angestellte Anschlagplatte (483) aufweist, wobei an dem Rahmen ein schwenkbar gelagerter Kipphebel (8) angeordnet ist, der einen Ausleger (82) aufweist, der in einer ersten Schwenkposition des Kipphebels (8) an der Anschlagplatte (483) anschlägt und der bei weiterem Verschwenken des Kipphebels (8) ein Anheben des mit der Anschlagplatte (483) verbundenen Batteriegehäuses (41) bewirkt.

6. Elektroroller nach Anspruch 5, **dadurch gekennzeichnet, dass** der Flügel an seinem freien Ende eine Querschnittsverjüngung aufweist, in die in einer zweiten Schwenkposition des Kipphebels (8) eine endseitig an diesem angeordnete Wulst (85) eingreift.

7. Elektroroller nach Anspruch 6, **dadurch gekennzeichnet, dass** an dem Rahmen eine hervorstehende Anschlagkante (29) angeordnet ist, an weleher der Kipphebel (8) mit seinem dem Wulst (85) entgegengesetzten Ende anliegt, wobei der Kipphebel (8) vorzugsweise an diesem Ende eine Einbuchtung (84) aufweist, in welche die Anschlagkante (29) eingreift.

8. Elektroroller nach einem der vorherigen Ansprüche, **dadurch gekennzeichnet, dass** an dem Batteriegehäuse (41) an wenigstens einer Längsseite, bevorzugt an beiden Längsseiten eine Führungskulisse (49) angeordnet ist, in die ein in dem Batteriefach (23) angeordneter Führungsbolzen (24) eingreift, um den die Batterie 4 schwenkbar ist.

## Claims

1. Electric scooter (1) with a step (2), on which a rear wheel (35) is arranged at the rear, which is connected to an electric motor (36), via which it can be driven, wherein a replaceable battery (4) is arranged, which is electrically connected to the electric motor (36), wherein the step (2) comprises a circumferential frame, which delimits a battery compartment (23), which receives the battery (4), wherein the battery (4) comprises a battery housing (41), which closes the battery compartment (23) and the upper side of which forms the step surface of the step (2) and wherein the battery housing (41) has locking means, which interact with a locking mechanism arranged on the frame, via which the battery (4) is detachably connected to the frame, **characterised in that**
the locking mechanism comprises at least one spring element, which is tensioned via the locking means when the battery (4) is inserted into the battery compartment (23) in such a manner that a vertical spring force directed against the step surface acts onto the battery housing (41), by means of which the battery (4) is held in the battery compartment (23), wherein the at least one spring element is formed by a leaf spring (6), which has a receptacle at the end, wherein the locking means comprise a driver arranged on the battery housing (41), which engages in the receptacle and/or
**in that** the locking mechanism comprises at least one holding magnet (5) arranged on the frame, wherein the locking means comprise a holding arm (482) projecting beyond the battery compartment (23) when the battery (4) is in the inserted position therein, which holding arm has a magnetic section, which interacts with the holding magnet (5) in such a manner that a vertical force directed against the step surface is effected on the battery housing (41), by means of which force the battery (4) is held in the battery compartment (23).

2. Electric scooter according to claim 1, **characterised in that** the driver is formed by at least one axle (47) arranged on the battery housing (41), wherein the at least one leaf spring (6) is bent at the end in such a manner that a channel (62) is formed, which forms the receptacle for the axle.

3. Electric scooter according to claim 1 or 2, **characterised in that** at least one positioning magnet (7) is arranged, via which the at least one leaf spring (6) is held in a defined upper position before insertion of the battery (4) into the battery compartment (23).

4. Electric scooter according to one of the previous claims, **characterised in that** the at least one spring element is designed in such a manner that a horizontal spring force is additionally produced when inserting the battery (4) into the battery compartment (23), by means of which the battery housing (41) is pressed against the circumferential frame on its side opposite the locking mechanism.

5. Electric scooter according to one of the previous claims, **characterised in that** a wing covering the frame at least in some regions is arranged on the battery housing (41), which has a stop plate (483) positioned substantially parallel to the frame, wherein a pivotably mounted rocker lever (8) is arranged on the frame, which has an extension arm (82), which strikes against the stop plate (483) in a first pivoting position of the rocker lever (8) and which causes the battery housing (41) connected to the stop plate (483) to be lifted when the rocker lever (8) is pivoted further.

6. Electric scooter according to claim 5, **characterised in that** the wing has a cross-sectional taper on its free end, into which a bead (85) arranged at the end of the rocker lever (8) engages in a second pivoting position of the latter.

7. Electric scooter according to claim 6, **characterised in that** a protruding stop edge (29) is arranged on the frame, against which the rocker lever (8) rests with its end opposite the bead (85), wherein the rocker lever (8) preferably has an indentation (84) at this end, in which the stop edge (29) engages.

8. Electric scooter according to one of the previous claims, **characterised in that** on the battery housing (41) on at least one longitudinal side, preferably on both longitudinal sides, a guide slot (49) is arranged, in which a guide pin (24) arranged in the battery compartment (23) engages, about which the battery 4 is pivotable.

## Revendications

1. Trottinette électrique (1), comprenant un plateau (2) contre lequel est disposée à l'arrière une roue arrière (35) reliée à un moteur électrique (36) qui permet d'entraîner ladite roue, sachant qu'est disposée une batterie amovible (4) électriquement reliée au moteur électrique (36), sachant que le plateau (2) comprend un cadre périphérique qui délimite un compartiment (23) recevant la batterie (4), sachant que la batterie (4) comprend un boîtier (41) de batterie qui ferme le compartiment (23) de batterie et dont le dessus forme la surface du plateau (2) et sachant que le boîtier (41) de batterie présente des moyens de fermeture qui interagissent avec un mécanisme de fermeture disposé contre le cadre, mécanisme via lequel la batterie (4) est reliée de façon détachable avec le cadre, **caractérisée en ce que** le mécanisme de fermeture comprend au moins un élément ressort qui, lors de la mise en place de la batterie (4) dans le compartiment (23) de batterie, est mis sous contrainte par les moyens de fermeture de telle façon qu'une force de ressort verticale s'exerçant contre la surface du plateau agit sur le boîtier (41) de la batterie et fait que la batterie (4) est retenue dans le compartiment (23) de batterie, sachant qu'au moins un élément ressort est formé par un ressort (6) à lame présentant un logement en son extrémité, sachant que les moyens de fermeture comprennent un taquet entraîneur disposé contre le boîtier (41) de batterie, taquet qui engrène dans le logement,
et/ou
**en ce que** le mécanisme de fermeture comprend au moins un aimant de retenue (5) disposé contre le cadre, sachant que les moyens de fermeture comprennent un bras de retenue (482) faisant saillie hors du compartiment (23) de batterie lorsque la batterie (4) est en place dans ledit compartiment, bras de retenue qui présente un segment magnétique interagissant avec l'aimant de retenue (5) de telle sorte que sur le boîtier (41) de batterie agit une force verticale de sens opposé à la surface du plateau, force faisant que la batterie (4) est maintenue dans le compartiment (23) de batterie.

2. Trottinette électrique selon la revendication 1, **caractérisée en ce que** le taquet entraîneur est formé par au moins un axe (47) disposé contre le boîtier (41) de batterie, sachant qu'au moins un ressort (6) à lame est incurvé en son extrémité de sorte qu'est formé un creux (62) formant le logement qui reçoit l'axe.

3. Trottinette électrique selon la revendication 1 ou 2, **caractérisée en ce qu'**est disposé au moins un aimant de positionnement (7) via lequel au moins un ressort (6) à lame est maintenu dans une position supérieure définie avant la mise en place de la batterie (4) dans le compartiment (23) de batterie.

4. Trottinette électrique selon l'une des revendications précédentes, **caractérisée en ce qu'**au moins un élément ressort est configuré de sorte que lors de la mise en place de la batterie (4) dans le compartiment (23) de batterie, une force de ressort horizontale est générée en plus, qui pousse le boîtier (41) de batterie, sur son côté opposé au mécanisme de fermeture, contre le cadre périphérique.

5. Trottinette électrique selon l'une des revendications précédentes, **caractérisée en ce qu'**est disposé contre le boîtier (41) de batterie un battant recouvrant au moins localement le cadre, battant qui présente une plaque butée (483) en applique essentiellement parallèle au cadre, sachant que contre le cadre est disposé un levier basculant (8) en appui pivotant, levier qui présente un bras (82) venant buter contre la plaque butée (483) lorsque le levier basculant (8) se trouve sur une première position de pivotement et qui provoque, pendant la poursuite du pivotement du levier basculant (8), un soulèvement du boîtier (41) de batterie relié avec la plaque butée (483).

6. Trottinette électrique selon la revendication 5, **caractérisée en ce que** le battant présente un rétrécissement de section en son extrémité libre, rétrécissement dans lequel engrène un bourrelet (85) disposé à l'extrémité du levier basculant (8) lorsque ce dernier se trouve sur une deuxième position de basculement.

7. Trottinette électrique selon la revendication 6, **caractérisée en ce que** contre le cadre est disposé un bord (29) de butée saillant contre lequel applique le levier basculant (8) par son extrémité opposée au bourrelet (85), sachant que le levier basculant (8) présente de préférence à cette extrémité un creux (84) dans lequel engrène le bord (29) de butée.

8. Trottinette électrique selon l'une des revendications précédentes, **caractérisée en ce que** contre le boîtier (41) de batterie, contre au moins un côté long, de préférence contre les deux côtés longs, est disposée une coulisse de guidage (49), dans laquelle engrène un goujon de guidage (24) disposé dans le compartiment (23) de batterie et autour duquel goujon la batterie (4) peut pivoter.
